(19) Europäisches Patentamt / European Patent Office / Office européen des brevets

(11) **EP 4 506 419 B1**

(12) **EUROPEAN PATENT SPECIFICATION**

(45) Date of publication and mention of the grant of the patent:
**29.10.2025 Bulletin 2025/44**

(21) Application number: **24192268.1**

(22) Date of filing: **01.08.2024**

(51) International Patent Classification (IPC):
*C08L 77/02* (2006.01)   *C08L 23/10* (2006.01)
*C08L 23/14* (2006.01)   *C08L 23/12* (2006.01)
*C08L 51/06* (2006.01)

(52) Cooperative Patent Classification (CPC):
(C-Sets available)
**C08L 23/10; C08L 77/02;** C08L 2201/14;
C08L 2203/16; C08L 2205/03; C08L 2205/035;
C08L 2207/02                                    (Cont.)

(54) **POLYMER COMPOSITION, EXTRUDED POLYMER COMPOSITION, ARTICLE COMPRISING SAID COMPOSITION AND METHOD FOR PREPARING SAID ARTICLE**

POLYMERZUSAMMENSETZUNG, EXTRUDIERTE POLYMERZUSAMMENSETZUNG, ARTIKEL MIT DIESER ZUSAMMENSETZUNG UND VERFAHREN ZUR HERSTELLUNG DIESES ARTIKELS

COMPOSITION POLYMÈRE, COMPOSITION POLYMÈRE EXTRUDÉE, ARTICLE COMPRENANT LADITE COMPOSITION ET PROCÉDÉ DE PRÉPARATION DUDIT ARTICLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.08.2023   NL 2035565**

(43) Date of publication of application:
**12.02.2025   Bulletin 2025/07**

(73) Proprietor: **QuinLyte Holding B.V.**
**6132 HN Sittard (NL)**

(72) Inventor: **CHEN, Hao**
**SITTARD (NL)**

(74) Representative: **Algemeen Octrooi- en Merkenbureau B.V.**
**P.O. Box 645**
**5600 AP Eindhoven (NL)**

(56) References cited:
**EP-A1- 3 670 131       WO-A1-2005/035648**

• **SATHE S N ET AL: "RELATIONSHIP BETWEEN MORPHOLOGY AND MECHANICAL PROPERTIES OF BINARY AND COMPATIBILIZED TERNARY BLENDS OF POLYPROPYLENE AND NYLON 6", JOURNAL OF APPLIED POLYMER SCIENCE, JOHN WILEY & SONS, INC, US, vol. 61, no. 1, 5 July 1996 (1996-07-05), pages 97 - 107, XP000635220, ISSN: 0021-8995, DOI: 10.1002/ (SICI)1097-4628(19960705)61:1<97::AID-APP11>3.0.CO;2-X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

    C-Sets
    **C08L 23/10, C08L 23/14, C08L 77/02, C08L 51/06;**
    **C08L 77/02, C08L 23/10, C08L 23/14, C08L 51/06;**

**C08L 77/02, C08L 23/12, C08L 23/10, C08L 23/14, C08L 51/06;**
**C08L 77/02, C08L 23/12, C08L 23/14, C08L 51/06;**
**C08L 77/02, C08L 23/12, C08L 51/06;**
**C08L 77/02, C08L 23/14, C08L 51/06**

**Description**

TECHNICAL FIELD

The present invention relates to a polymer composition comprising polyamide 6, a maleic anhydride-grafted polypropylene and a polypropylene composition. Further, the invention relates to an extruded polymer composition, an article comprising said composition, a method of preparing said article, and to an extruded film and to a blown film both comprising the composition of the present invention.

BACKGROUND

In barrier packaging applications, sufficient barrier is required to minimize the permeation of both oxygen (non-polar) and water vapour (polar) into the packaging. The role of barrier property is to extend the shelf life of packed foods or goods which are more sensitive to both oxygen and moisture. Barrier packaging products typically have a multiple-layer structure prepared from multiple materials. There is no single mono-material yet that can provide a good barrier to both oxygen and water vapour. These multiple material packaging products are very difficult for recycling. Most of them end up with incineration or in landfill.

In contrast to barrier packaging, the traditional non-barrier packaging applications represent most of the packaging applications. They are suitable for foods or goods whose shelf life is less sensitive to both oxygen and moisture. For these types of packaging, there is a strong trend moving towards mono-material solutions for recycling purpose. However, even high-quality recycled materials are difficult to be used again by most of such packaging products due to Food-Contact requirements. Although people could let the recycled material sandwiched by two layers of virgin materials, the non-polar and polar impurities in recycled material can still penetrate through the virgin material layers into packed foods or goods. And as said, there is no single mono-material yet that can provide a good barrier to both polar and nonpolar impurities.

With "mono-material product" according to the present description is meant that each part of the product is prepared from the same single material which may be a homopolymer, a copolymer, or a polymer blend or composition comprising several components.

In a completely different field, namely industrial film and technical textile applications, multiple materials are coextruded, comingled, co-woven, and or laminated to reach required performance such as dimensional stability (e.g., using polypropylene or polyester), thermal resistance (e.g., using polyamide and polyester), and resistance against hydrolysis and chemical resistance (e.g., using polyamide and propylene). Compared with consumer packaging, these industrial products are much easier to collect for recycling and ideally the recycled materials should be used again in the same application to become truly cradle-to-cradle circular. To arrive at a cradle-to-cradle circularity, it is required that a mono-material must be used, and this mono-material must have the comparable performance to that of the current multi-material solutions.

Like metal alloys are created to combine the performance advantages of different types of metals, making a high-quality polymer alloy could be an effective solution to combine the benefits of different polymers. To reach the desired performance described above, the polymer alloy must contain both polar, such as polyamides, and nonpolar components, such as polypropylenes. Such type of alloy falls under immiscible polymer blends. Examples of polymer blends can be found in EP 3 670 131 A1 of the present inventor. WO 2005/035648 A1 discloses a thermoplastic composition in which an isotactic polypropylene and a polyamide are blended with a specific grafted functionalized propylene-based elastomer. Sathe et al. Journal of applied polymer science 61:5 1996, pp. 97-107 discloses the relationship between morphology and mechanical properties of binary and compatibilized ternary blends of polypropylene and Nylon 6.

In general, the morphologies of polymer blends can be divided into two typical classifications: i) matrix with dispersed droplets morphology, ii) co-continuous morphology.

In a matrix with dispersed droplets morphology, the minor component is dispersed in a matrix formed by the major component (i.e., sea-island morphology). It is the most common morphology for immiscible polymer blends. This is because the droplets lifetime (how long the morphology can stay under molten condition) is longer than that of the fibrillar structure for obtaining a stable network structure in a high interfacial tension system.

In a co-continuous morphology, the mixing components show an orderly arranged or sometimes entangled fibrillar structure. It is the most common morphology for miscible polymer blends. This is because the fiber-to-fiber lifetime is longer than that of the droplets in a low interfacial tension system. Blending polymers with the same dipole properties such as blending polypropylenes with high density polyethylene falls under miscible blends.

On the other hand, a co-continuous morphology is very desired by the immiscible polymer blends because it may allow all polymer components to perform to the maximal level. Instability is the major challenge, because high interfacial tension will drive the system towards a smaller interfacial area. The elongated fibrillar structure will break up, retract, or coarsen into droplets forms in the melting process.

It is very difficult for immiscible polymer blends to reach and keep large fraction of co-continuous phase at the level of polymer blends itself. It is a very sensitive balance. Any small change in the polymer composition and processing condition may change the morphology back to matrix with dispersed droplets.

Thus, there is a need for an immiscible polymer wherein all components can optimally contribute their performance advantages in extruded and optionally moulded form.

OBJECTS

It is an object of the present invention to provide an improved immiscible polymer composition.

It is a further object of the present invention to provide a polymer composition with good polar and non-polar barrier properties in extruded and optionally moulded articles.

It is a further object of the present invention to provide a polymer composition that presents higher thermal resistance performance than polypropylenes in extruded and optionally moulded articles.

It is a further object of the present invention to provide improved polymer composition that presents both performance advantages of polyamide 6 and polypropylenes in extruded and optionally moulded articles.

It is a further object of the present invention to provide a polymer composition that maintains good performance after recycling, in extruded and optionally moulded articles.

SUMMARY

In a first aspect, the present invention relates to a polymer composition comprising:

(A) between 35 and 58 wt.% of polyamide 6 having a relative solvent viscosity (RSV) measured in 90% formic acid of 2.5 or higher;

(B) between 2 and 10 wt.% of a maleic anhydride-grafted polypropylene having: i) a MFR of above 40 g/10min (@190°C 2,16kg), and ii) a maleic anhydride concentration of 0.5-1.8 wt.% based on the weight of the maleic anhydride-grafted polypropylene;

(C) between 32 and 63 wt.% of a polypropylene composition having an MFR of less than 25 g/10min (@230°C 2,16kg), wherein said polypropylene composition comprises at least 80 wt.%, based on the weight of the polypropylene composition, of one or more heterophasic propylene copolymers when the amount of polyamide 6 is less than 45 wt.%,

wherein the wt.% of the polymers under (A), (B), and (C) is defined based on the combined weight of (A), (B), and (C).

In a second aspect, the present invention relates to an extruded and optionally moulded polymer composition wherein the polymer composition is according to the first aspect.

In a third aspect, the invention relates to an article comprising the composition according to the first aspect.

In a fourth aspect, the invention relates to a method of preparing the article according to the second aspect.

In a fifth aspect, the invention relates to an extruded film comprising the composition according to the first aspect.

In a sixth aspect, the invention relates to a blown film comprising the composition according to the first aspect.

Embodiments of the first aspect of the present invention, being the polymer composition (also called alloy, polymer alloy or plastic alloy; or blend, plastic blend, or polymer blend) are applicable correspondingly for an extruded and optionally moulded polymer composition according to the second aspect, an article according to the third aspect, and a method according to the fourth aspect.

The present inventor has observed that polymer alloys, which are a combination of very specific polymers with very specific characteristics, namely A) polyamide 6 with certain characteristics, B) high concentration maleic anhydride-grafted polypropylenes with certain characteristics and C) a polypropylene composition with certain characteristics provide the required properties. The combination of materials after being extruded and optionally moulded was surprisingly found to have both a high oxygen barrier and a high moisture (water vapor) barrier. These materials further were surprisingly found to have higher thermal resistance than polypropylenes. It also combines the excellent properties of both polyamide and polypropylenes, being a high tensile modulus and strength, good impact resistance, good heat resistance, high abrasion resistance with low friction, and high non-polar substance barrier properties of the polyamide phase; with the low density, high fatigue resistance, very low water moisture absorption, very low dielectric constants and very high polar substance barrier of the phase with the polypropylene(s).

Without wishing to be bound by theory, the inventor believes that the achievement of low hot air shrinkage @ 180°C and of a high oxygen barrier suggests the extruded plastic article has obtained the performance advantage of polyamide; while the achievement of a high water vapor barrier suggests the extruded and optionally moulded plastic article has obtained the performance advantage of polypropylenes. These qualities of the extruded plastic article suggest that polyamide 6 is not in a dispersed droplet phase and that polypropylene is not in a dispersed droplet phase.

In addition, when recycling the extruded and optionally moulded plastic article manufactured from the polymer composition according to the present invention, and reprocessing it into new plastic article, the above-described performance advantages remain. This suggest that when the molecular orientation remains, the (co-)continuous morphology remains.

Thus, the inventor believes that the immiscible polymer blend composition according to the present invention may stay with the morphology of matrix with dispersed droplets. But when it is extruded and optionally moulded, the molecules start to orient in the flow direction of molten polymer, the phases of droplets will more easily orient then connect and change into at least partially continuous fibrillar or lamellar structures. After the polymer form cools down and solidifies, the molecular orientation will remain, hence the (co-) continuous morphology will remain in the final products.

DESCRIPTION OF EMBODIMENTS

Polymer composition

As stated above, the present invention relates in a first aspect to a polymer composition comprising:

(A) between 35 and 58 wt.% of polyamide 6 having a relative solvent viscosity (RSV) measured in 90% formic acid of 2.5 or higher;
(B) between 2 and 10 wt.% of a maleic anhydride-grafted polypropylene having: i) a MFR of above 40 g/10min (@190°C 2,16kg), and ii) a maleic anhydride concentration of 0.5-1.8 wt.% based on the weight of the maleic anhydride-grafted polypropylene;
(C) between 32 and 63 wt.% of a polypropylene composition having an MFR of less than 25 g/10min (@230°C 2,16kg), wherein said polypropylene composition comprises at least 80 wt.%, based on the weight of the polypropylene composition, of one or more heterophasic propylene copolymers when the amount of polyamide 6 is less than 45 wt.%,

wherein the wt.% of the polymers under (A), (B), and (C) is defined based on the combined weight of (A), (B), and (C).

It should be noted that where it reads "between 35 and 58 wt.%", 35 and 58 wt.% are included, and this could also be written as "35-58 wt.%". This is also valid for all similar mentions of ranges throughout this description.

The polymer composition according to the present invention can also be defined as a polymer alloy or alloy. Polymer alloy or alloy as used in the present description means a material that is analogous to metal alloys, wherein at least two different macromolecular substances (viz. polymers or copolymers) are blended, not including polymer additives. (Polymer) alloy according to the present description specifically refers to an immiscible blend exhibiting at least two phases (of at least two blend components) but with low interfacial tension. Preferably, the phases are mixed to such an extent that the inhomogeneity caused by different phases is on a small enough scale not to be apparent in use.

In an embodiment, the polymer composition will consist of (A), (B), and (C), in other words, the combined weight of (A), (B), and (C) forms 100 wt.% of the polymer composition. In another embodiment, the polymer composition will comprise in addition to (A), (B), and (C), other components, such as fillers. In other words, combined weight of (A), (B), and (C) forms < 100 wt.% of the polymer composition, for example at least 60 wt.%, at least 70 wt.%, at least 80 wt.%, at least 90 wt.%, at least 95 wt.%, at least 98 wt.%, at least 99 wt.%.

In an embodiment, the polymer composition comprises:

(A) between 35 and 50 wt.% of polyamide 6 having a relative solvent viscosity (RSV) measured in 90% formic acid of 2.5 or higher;
(B) between 2 and 10 wt.% of a maleic anhydride-grafted polypropylene having: i) a MFR of above 40 g/10min (@190°C 2,16kg), and ii) a maleic anhydride concentration of 0.5-1.8 wt.% based on the weight of the maleic anhydride-grafted polypropylene;
(C) between 40 and 63 wt.% of a polypropylene composition having an MFR of less than 10 g/10min (@230°C 2,16kg), wherein said polypropylene composition comprises at least 80 wt.%, based on the weight of the polypropylene composition, of one or more heterophasic propylene copolymers when the amount of polyamide 6 is less than 45 wt.%, wherein said polymer composition consists of one or more heterophasic propylene copolymers when the amount of polyamide 6 is less than 45 wt.%,

wherein the wt.% of the polymers under (A), (B), and (C) is defined based on the combined weight of (A), (B), and (C).

In a further embodiment, the polymer composition comprises:

(A) between 36 and 56 wt.% of polyamide 6 having a relative solvent viscosity (RSV) measured in 90% formic acid of 2.5 or higher;

(B) between 2 and 10 wt.% of a maleic anhydride-grafted polypropylene having: i) a MFR of above 40 g/10min (@190°C 2,16kg), and ii) a maleic anhydride concentration of 0.5-1.8 wt.% based on the weight of the maleic anhydride-grafted polypropylene;

(C) between 34 and 62 wt.% of a polypropylene composition having an MFR of less than 10 g/10min (@230°C 2,16kg), wherein said polypropylene composition comprises at least 80 wt.%, based on the weight of the polypropylene composition, of one or more heterophasic propylene copolymers;

wherein the wt.% of the polymers under (A), (B), and (C) is defined based on the combined weight of (A), (B), and (C).

In an embodiment, the polymer composition has a density of 0.97-1.02 gram/cm$^3$, preferably 0.97-1.00 gram/cm$^3$ measured according to ISO 1183-1:2019 (method A - immersion method). This density is beneficial when an article made from the polymer composition will be recycled, because the article will float in (unsalted) water and will be easily separated from most other engineering polymers whose density is higher than that of water. And it could also be separated from polyolefin polymers whose density is below 0.97 gram/cm$^3$. In 80 °C hot water with a density of 0.97 gram/cm$^3$, the polyolefins will still float, while the polymer composition according to the present invention will start to sink.

Each of the components will be discussed separately below.

_Component A_

Polyamide 6 as used in the present description means Nylon 6 or polycaprolactam. Nylon 6 is synthesized by ring-opening polymerization of caprolactam. Caprolactam has 6 carbons, hence Nylon 6.

The medium to high viscosity of the polyamide 6, defined by RSV of 2.5 or higher, is beneficial to allow the manufacture of fast-cycle injection moulded articles or extruded articles, especially in a medium-to-low tenacity fiber from the polymer composition.

In an embodiment, polyamide 6 has a relative solvent viscosity (RSV) measured in 90% formic acid of 2.5 - 2.7.

In an embodiment, polyamide 6 has a relative solvent viscosity (RSV) measured in 90% formic acid of 2.7 or higher, this embodiment is preferably used when the plastic article is injection or blown moulded for example a body panel, a manifold, a container or a bottle, or extruded for example a cast film, a blown film, a sheet, a profile, a tube, a foam, and but not least a medium-to-high tenacity fiber..

_Component B_

Component B is a polymer composition comprising one or more ultra-low viscosity functionalized propylene polymers on which a relatively high amount of maleic anhydride is grafted (MA-g-PP). It has the function to reduce the interfacial tension between component (A) and (C) and to chemically bond component (A), then defuse into (C) which is the matrix phase. Ultra-low viscosity in the context of the present application means an MFR of above 40 g/10min (@190°C 2,16kg), preferably above 50 g/10min.

Maleic Anhydride is the preferred because it as the simplest cyclic anhydride creates strong covalent bond (imide linkage) after reaction with the amine end group of polyamides.

Several types of MA-g-PPs are available, and these are usually defined by the following features: i) the MFR (g/10min @ 190°C), ii) the weight percentage of maleic anhydride (MA), iii) the melt peak temperature; and iv) the melt enthalpy. The MFR may for example range between 40 and 100 or may be above 100 g/10min. The MA content may be for example, 0.5 wt.% , 0.8 wt.% , 1.0 wt.%, 1.2 wt.%, 1.4 wt.%, 1.6 wt.%, or 1.8 wt.%. Any other value between 0.5 and 1.8 is also possible. In an embodiment, the MA-g-PP for component B has an MFR of above 50 g/10min, preferably above 60 g/10min.

In an embodiment, the MA-g-PP for component B has a DSC melting peak temperature of the second heating scan at a heating rate of 20K/minute of between 130°C and 165°C, and a normalized melting enthalpy of between 5 and 100 J/g. The melt peak temperature may be anywhere in the range of 130 to 165 °C and the normalized melting enthalpy may be between 5 and 100 J/g.

Melting peak temperature and melting enthalpy are taken from DSC measurement. The melting enthalpy is computer calculated by integrating the areas between the endothermal curve and the base line of the second heating scan in the temperature range between 80°C and 180°C.

In a further embodiment, component (B) is composed of one or more MA-g-PPs and component (B) has an average MA concentration of 0.8-1.5 wt.%. This is calculated by the total weight of MA divided by the total weight of component (B).

The exact amount of component (B), viz. MA-g-PP, in wt.% of combined weight of component (A), (B), and (C) is determined by the desired total MA concentration ('total MA concentration limit'), based on the combined weight of component (A), (B), and (C), and the average MA concentration in component (B).

$$Amount\ of\ component\ B(wt.\%) = \frac{total\ MA\ concentration\ limit}{average\ MA\ concentration\ in\ component\ B}$$

In an embodiment, the polymer composition has a total MA concentration of less than 0.18 wt.%, preferably less than 0.15 wt.%, more preferably less than 0.1 wt.%, based on the combined weight of (A), (B), and (C). Too high MA concentration will hinder the performance of polyamide phase.

In another embodiment, the polymer composition has a MA concentration of more than 0.01 wt.%, preferably 0.02 wt.% or higher based on the combined weight of (A), (B), and (C). Too low MA concentration cannot reduce enough the interfacial tension between PP and PA polyamide phases and result in phase segregation.

*Component C*

Component C is a polymer composition comprising one or more propylene containing polymers, such as polypropylene homopolymers; polypropylene random copolymers; polypropylene heterophasic copolymers which have homopolymer or random copolymer matrix with a dispersed rubbery copolymer phase; and elastomer modified polypropylenes produced by blending/reacting polypropylene with an olefinic elastomer such as EPDM, EPR, EVA and SBS.

It should be noted that any MA-g-PP falling under component (B) is excluded from component (C). Nonetheless, the polymer composition of component (C) may comprise other MA-grafted PPs, e.g., with a higher viscosity and/or a lower concentration of MA than specified under (B). A low-concentration MA-grafted high viscosity PP may improve the mixing effect of component (C) which will result in the mechanical property improvement of extruded articles.

All polypropylenes present in the polymer composition according to the present invention is either maleic anhydride-grafted polypropylene (MA-g-PP) falling under (B), or included in the polypropylene composition under (C).

In an embodiment, when the RSV of PA6 is lower than 3.0, the polypropylene composition under (C) has an MFR of less than 25 g/10min (@230°C 2.16kg), preferably less than 20 g/10min.

In another embodiment, when the RSV of PA6 is 3.0 or higher, the polypropylene composition under (C) has an MFR of less than 10 g/10min (@230°C 2.16kg), preferably less than 6 g/10 min.

To reach optimal mixing between (A) and (C), the higher RSV of PA6 (A) is, the lower MFR (reflecting a higher viscosity) of (C) should be. A higher viscosity PA6 will be more difficult to break up into smaller droplets or thinner fibrillar or lamellar phases in a lower viscosity PP matrix.

In an embodiment, the polypropylene composition under (C) has an MFR of less than 10 g/10min (@230°C 2,16kg).

As stated above, the claimed range for component A (polyamide 6) may vary between 35 wt.% and 58 wt.%. However, the present inventor has observed that when the amount of polyamide 6 in the polymer composition is less than 45 wt.% (meaning that polyamide 6 in terms of volume is absolutely a minority phase compared with that of the polypropylene phase), the polypropylene composition under (C) must comprise at least 80 wt.% of one or more heterophasic propylene copolymers to ensure that the performance of polyamide 6 will not be handicapped in extruded and optionally moulded articles by being the droplets phase well dispersed in polypropylene polymer matrix.

In an embodiment, when the amount of polyamide 6 in the polymer composition is less than 45 wt.%, the polypropylene composition under (C) comprises at least 85 wt.%, preferably at least 90 wt.%, preferably at least 95 wt.%, based on the weight of the polypropylene composition, of one or more heterophasic propylene copolymers. In a specific embodiment, when the amount of polyamide 6 in the polymer composition is less than 45 wt.%, the polypropylene composition under (C) consists of one or more heterophasic propylene copolymers.

When the amount of polyamide 6 in the polymer composition is 45 wt.% or more (e.g. between 45 wt.% and 58 wt.%), the polypropylene composition under (C) may still comprise or consist of one or more heterophasic propylene copolymers, but it may also comprise other types of polypropylene or consists solely of one or more other types of polypropylene without the polypropylene performance being not be handicapped in extruded and optionally moulded articles by being the droplets phase dispersed in polyamide polymer matrix.

Heterophasic propylene copolymer as used in the present description means a copolymer that basically has at least a two-phase structure, consisting of a propylene-based semi-crystalline matrix and a dispersed elastomer phase, typically an ethylene-propylene rubber (EPR). These polypropylene copolymers are generally prepared in one or more reactors, by polymerization of propylene in the presence of a catalyst system, and subsequent polymerization of a propylene-ethylene mixture; but can also be made by blending different (co)polymers. The resulting polymeric materials are heterophasic; studies have demonstrated the presence of four phases in heterophasic propylene-based copolymers: crystalline polypropylene, amorphous polypropylene, crystalline ethylene-propylene rubber (optional), and amorphous ethylene-propylene rubber. The advantage of such polymer is improved impact resistance, especially at lower temperatures.

In an embodiment, the heterophasic propylene copolymer has:

a) a DSC melting peak temperature of the second heating scan at a heating rate of 20K/minute of between 140°C and 170°C, preferably between 155°C and 168°C, and

b) a normalized melting enthalpy of between 55 and 95 J/g, preferably between 65 and 90 J/g. The normalized melting enthalpy was taken between 80°C and 180°C.

In principle, a heterophasic propylene copolymer composition with lower melting peak temperature and lower melting enthalpy is more effective to prevent PA6 phase from becoming the dispersed droplets phase in extruded and optionally moulded articles. On the other hand, it is not the lower the better. Because it will at the same time reduce the mechanical and thermal resistance properties of polypropylene phase.

It may be that more than one heterophasic propylene copolymers are present in the polymer composition under (C). In that case, the combined composition of these heterophasic propylene copolymers may have the features under a) and b) above.

*Optionally other components*

The polymer composition according to the present invention may comprise other components than (A), (B) and (C). Such components are typically the inorganic and organic fillers added into the polymer composition. Typical fillers include but not limited to glass beads, glass fibers and carbon fibers as the reinforcement filler; talc or magnesium as the thickening agent to reduce warpage and sink on thick walls; calcium carbonate as the thermal stability agent; mica such as muscovite or phlogopite to improve rigidity with retention of toughness; silicate mineral powders such as kaolinite and wollastonite for low distortion rigid moulded parts; flame retardancy fillers such as melamine cyanurate (MeCy), carbon black, carbon nanotubes (CNTs), aluminum trihydroxide (ATH), and phosphates.

Extruded and optionally moulded polymer composition

As stated above, the present invention relates in a second aspect to an extruded and optionally moulded polymer composition wherein the polymer composition is according to the first aspect. The formed plastic articles present strong polyamide properties such a high oxygen (or other non-polar substances) barrier and higher thermal resistance while still maintain the strong polypropylene properties such as high water vapour (or other polar substances) barrier.

The present inventor has a hypothesis that in the first aspect, the preparation of polymer composition, due to the existence of component (B) the interfacial tension between the polypropylene and polyamide phases are low enough to keep the polyamide phase as the small droplets well dispersed in the polypropylene phase which is the majority phase by volume. While in the second aspect, when the polymer composition is extruded and optionally moulded into articles, polymer molecules are to a certain extent oriented in the flow direction of viscous extrudates, wherein the droplets phases are oriented, stretched, and at least in some areas connected and, hence, change into at least partially continuous fibrillar or lamellar structures. When the molecular orientation remains, the continuous structure remains.

To show this effect in the experimental section also data for a compression moulded (non-oriented molecules) sample is provided which clearly shows that the storage modulus is approaching to zero below 180°C whereas for the injection moulded (partially oriented molecule) polymer compositions the storage modulus does not approach zero at 180°C, even when the same polymer composition is used.

The polymer composition may be in pellet or granule form. In this form it can be stable stored for later extrusion and optionally moulding steps.

It is possible to manufacture an extruded and optionally moulded polymer composition according to the present invention by providing at least 75 wt.% polymer composition according to the present invention and then combining (e.g. via dry blending) the composition with for instance additional PA6 (e.g. according to component (A)) or additional polypropylene composition (e.g. according to component (C)), prior to extrusion and optionally moulding. The total fraction of PA6 should be between 35 and 58 wt.% in the final blend.

Thus, in an embodiment of the extruded and optionally moulded polymer composition, the polymer composition comprises at least 75 wt.% of the polymer composition according to the first aspect of the invention. The remaining at most 25 wt.% may comprise or consist of polyamide 6 or polypropylene composition, preferably the PA6 having a relative solvent viscosity (RSV) measured in 90% formic acid of 2.5 or higher and the polypropylene composition having an MFR of less than 25 g/10min (@230°C 2,16kg). In other words, the PA6 may be according to (A) and the polypropylene composition may be according to (C).

In an embodiment of the second aspect, the extruded polymer composition is a film having a thickness of between 1 and 250 micrometres. For example, it may be a film, such as a blown film, having a thickness of around 50 micrometres, such as 50 micrometres.

In a further embodiment, the extruded polymer composition is a blown film having a thickness of 50 micrometres and having a shrinkage of at most 5% in MD and TD direction after being placed in a 180°C oven for 2 minutes. This shrinkage may be determined via the Hot Air Shrinkage (HAS) test as described below. For example, the shrinkage may be at most 5.0, or less than 5.0%, at most 4.0%, less than 4.0%, at most 3.0%.

In an embodiment of the second aspect, the extruded polymer composition is a sheet having a thickness of higher than 250 micrometers.

In an embodiment of the second aspect, the extruded polymer composition is a foamed sheet.

In an embodiment of the second aspect, the extruded and then optionally moulded polymer composition is a blown moulded or injection moulded or thermal formed article such as a bottle, a container or a pannel.

In a further embodiment, the extruded and optionally moulded polymer composition has an oxygen permeability of less than 12 ml*mm/(mm$^2$*day), measured according to ASTM F1927-20 at 23°C and 50% relative humidity. In a specific embodiment, the oxygen permeability is less than 8 ml*mm/(mm$^2$*day), measured according to ASTM F1927-20 at 23°C and 50% relative humidity. The oxygen permeability value is determined via the transmission rate on a 50-micron meters film measured according to ASTM F1927-20 at 23°C and 50% relative humidity.

In a further embodiment, the extruded and optionally moulded polymer composition has a water vapour permeability of less than 0.25 gram*mm/(mm$^2$*day), measured according to ASTM F1249-20 at 23°C and 85% relative humidity. In a specific embodiment, the water vapour permeability is less than 0.18 gram*mm/(mm$^2$*day), measured according to ASTM F1249-20 at 23°C and 85% relative humidity. The water vapour permeability value is determined via the transmission rate on a 50-micron meters film measured according to ASTM F1249-20 at 23°C and 85% relative humidity.

In a further embodiment, the extruded and optionally moulded polymer composition has both an oxygen permeability of less than 12 ml*mm/(mm$^2$*day), preferably of less than 8 ml*mm/(mm$^2$*day), measured according to ASTM F1927-20 at 23°C and 50% relative humidity, and a water vapour permeability of less than 0.25 gram*mm/(mm$^2$*day), preferably less than 0.18 gram*mm/(mm$^2$*day), measured according to ASTM F1249-20 at 23°C and 85% relative humidity.

In an embodiment of the second aspect, the extruded polymer composition is a mono- or multi-filament that has the performance advantages of polyamide such as higher tensile strength, higher bending resilience, higher temperature resistance and higher abrasion resistance, and the performance advantages of polypropylenes such as high dimensional stability, low dielectric constant and high chemical resistance.

In an embodiment of the second aspect, the extruded polymer composition is a monofilament which is further extruded in fused deposition modelling (FDM) process to form a 3D printed part. The 3D printed part presents the performance advantages of both polyamides and polypropylenes.

Without wishing to be bound by theory, the inventor believes that the extruded polymer composition according to the present invention will have both low oxygen permeability (OP) and low water vapour permeability (WVP) because both PA6 and the PPs are in a continuous phase, which is achieved by the specific combination of polymers with specific characteristics disclosed in claim 1. It is known that polyamide 6 has good oxygen barrier properties but poor water vapor barrier properties. In addition, it is known that polypropylene has excellent water vapor barrier properties but poor oxygen barrier properties. By extruding and/or moulding the specific alloy according to the invention into film, sheets and containers, the matrix PP phases remains its continuous form to contribute excellent water vapor barrier, while the originally dispersed droplets of PA phase orient, stretch, and eventually connect into at least partially continuous fibrillar or lamellar microphases which will contribute to a high barrier to non-polar substance such as oxygen. Next to barrier properties, the low hot air shrinkage at 180°C is a second proof that polyamide is no longer present as droplets dispersed in a matrix in the extruded and/or moulded form.

Without wishing to be bound by theory, the inventor believes that the extruded extruded and optionally moulded polymer composition according to the present invention may have at least partially co-continuous phase morphology. Wherein the PP remains as the continuous matrix phase, while the originally dispersed droplets of PA phase orient, stretch, and eventually connect into at least partially continuous fibrillar or lamellar microphases.

The extruded article according to the invention shows the same properties if it is formed directly after formation of the polymer composition or if the polymer composition has been stored within the standard shelf life of at least 2 years.

Article

As stated above, the present invention relates in a third aspect to an article comprising the polymer composition according to the first aspect.

In an embodiment, the article is a tube, a profile, or a jacket that covers a wire or cable. The articles present the performance advantages of both polyamides and polypropylenes.

Method to prepare the article

As stated above, the present invention relates in a fourth aspect to a method to prepare an article according the third aspect, comprising 3D printing, film or sheet extrusion, monofilament or multifilament extrusion, foam or tube or profile extrusion, extrusion blow moulding, injection blow moulding, stretch blown moulding, thermoforming, injection moulding, or extrusion coating.

In an embodiment, the method comprises injection moulding, blow moulding or thermoforming the polymer composition according to the first aspect of the present invention.

Extruded film

As stated above, the present invention relates in a fifth aspect to an extruded film having a thickness of between 1 and 250 micrometres, comprising at least 75 wt.% of the polymer composition according to the first aspect of the present invention.

Blown film

As stated above, the present invention relates in a sixth aspect to a blown film having a thickness of 50 micrometre and having a shrinkage of at most 5% in MD and TD direction after being placed in a 180°C oven for 2 minutes, comprising at least 75 wt.% of the polymer composition according to the first aspect of the present invention.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The scope of the present invention is defined by the appended claims. One or more of the objects of the invention are achieved by the appended claims.

MATERIALS AND METHODS

MFR

Melt flow rate (MFR), if not specifically specified, was measured according to ISO 1133:1-2011. There are two conditions applied. For normal and high viscosity polyolefin polymers it is at 230°C, 2.16 kg; for ultra-low viscosity polyolefin polymers it is at 190°C, 2.16kg.

DSC

Differential Scanning Calorimetry (DSC), if not specifically specified, was conducted according to ASTM D3418-03. A slice (weight of between 4 - 5 mg) of a polymer granule was cut as the test specimen. Each test specimen was heated from -20°C to 250°C at a heating rate of 20K/minute (first heating scan) to remove the thermal history. The sample was then held for 5 minutes under at the temperature of 250°C, then cooled from 250°C at 20K/minute to -20 °C (cooling scan). The sample was then held for 5 min under temperature of -20°C. Afterwards the sample was heated again from -20°C to 250°C at a heating rate of 20 k/min (second heating scan).

DMA / Storage modulus

Storage modulus describes the elastic property of a viscoelastic material typically made from a polymer composition. When a polymer article is melted, it becomes completely viscous, and the storage modulus is approaching to zero.

In the present invention, if the storage modulus at above PP melting peak (above 170°C) approaches to zero, it is the direct evidence that the PA phase in the polymer composition remains as the dispersed droplets phase. Vise versa, the higher level the storage modulus at above PP melting peak (above 170°C), the more PA forms into continuous phase.

Storage modulus at elevated temperatures is determined by DMA measurement. Dynamic Mechanical Analysis (DMA), if not specifically specified, was conducted according to ISO 6721-4. Samples underwent a thermal ramp from 27 to 190 °C with heating rate of 3 °C/min, frequency of 1 Hz and amplitude of 10 $\mu$m.

Samples for DMA were prepared in the following manner. Compression moulded samples were prepared by compressing 0.5 - 0.6 g of polymer pellet at 230°C with a force of 50 kN for 5 minutes to form 30 x 30 x 0.5 mm thin plate. Afterwards, the compressed samples were taken out and quenched by dropping into room temperature water. Before the DMA measurement, a 20 x 2 x 0,5 mm dog bone shape sample was cut from the plate and dried in 80°C vacuum oven for 6 hours.

Injection moulded samples were prepared by injection molding an 80 x 80 x 1.0 mm thin plate with mold temperature 60°C. Before the DMA measurement, a 20 x 2 x 1,0 mm dog bone shape sample was cut along the polymer flow direction and dried in 80°C vacuum oven for 6 hours.

Blown Film

Blown Film samples was prepared under Collin Blown Film Unit BL 200. Film die diameter is 94.2 mm, die gap is 0.8 mm. Extrusion temperature was 260°C. Blow-up-Ratio was 2.5 - 2.6. Film thickness was around 50 micron.

OTR

Oxygen Transmission Rate (OTR), if not specifically specified, is measured according to ASTM F1927-20, at 23°C and 50% relative humidity. It has a unit of ml/(m$^2$·day). OTR is dependent on the thickness of the measured sample.

OP

When the sample is made from a homogeneous mono material, the measured OTR can be converted into an Oxygen Permeability (OP) value according to the following equation:

$$OP = \frac{OTR \times Film\ thickness\ (\mu m)}{1000}$$

OP has a unit of ml·mm/(m$^2$·day). Physically, it defines the oxygen permeation property of a homogeneous mono material. OP is not dependent on the thickness of measured sample. Instead, it is used to predict the OTR of a plastic film (sheet or wall) with a given thickness, assuming the film (sheet or wall) is not further stretched in solid state.

$$OTR = \frac{OP \times 1000}{Film\ (Sheet\ or\ Wall)\ thickness\ (\mu m)}$$

WVTR

Water Vapour Transmission Rate (WVTR), if not specifically specified, is measured according to ASTM F1249-20, at 23°C and 85% relative humidity. It has a unit of gram/(m$^2$·day). WVTR is dependent on the thickness of the measured sample.

WVP

When the sample is made from a homogeneous mono material, the measured WVTR can be converted into a Water Vapour Permeability (WVP) value according to the following equation:

$$WVP = \frac{WVTR \times Film\ thickness\ (\mu m)}{1000}$$

WVP has a unit of gram·mm/(m$^2$·day). Physically, it defines the water vapour permeation property of a homogeneous mono material. WVP is not dependent on the thickness of measured sample. Instead, it is used to predict the WVTR of a plastic film (sheet or wall) with a given thickness, the film (sheet or wall) is not further stretched in solid state.

$$WVTR = \frac{WVP \times 1000}{Film\ (Sheet\ or\ Wall)\ thickness\ (\mu m)}$$

Density

The density of the polymer compositions was determined according to ISO 1183 with the immersion method.

<u>HAS</u>

The film Hot Air Shrinkage (HAS) test compares the distance between specific marked points on a film sample before and after placing the film sample into a 180°C preheated dry oven for 2 minutes.

Since OTR measurement is costly and time consuming, HAS was introduced as an efficient alternative to test whether PA becomes the continuous phase in the film. If only PP is the continuous phase and PA remains as the droplets phase, the film will shrink significantly and melt at edges under this test condition. Because the melting peak of PP phase is below 170°C.

The test was done in the following manner:

On a A4 0,5cm grid paper, a 30 x 30 grid square was drawn. The four vertices of the square, the four middle points on each side and the centre of the square were marked. These nine dots represent three vertical and three horizontal lines with equal length.

An A4 size 50 micron blown film sample, was placed on the grid, and the nine dots were marked on the film sample. The film sample was then placed on top of a stainless-steel plate which was covered with Teflon paper. The film sample was placed into a 180°C preheated dry oven for 2 minutes. After removal from the oven, the film sample was allowed to cool to room temperature. The film sample was again placed on the grid paper and the largest displacement dots were used to calculate the shrinkage (in %) in horizontal and vertical directions. For each film sample, the test was repeated twice. Further, it was visually inspected whether the film had melted at the edges.

<u>Materials</u>

<u>*Component (A)*</u>

The polyamides (PA) used in the examples is PA6 homopolymers and have a relative viscosity index of 3.0 - 3.2 measured in 90% formic acid.

<u>*Component (B)*</u>

The maleic anhydride grafted functionalized propylene (co-)polymers and or elastomers (MA-g-PP) are listed in Table 1. The MFR is measured at 190°C 2.16kg. The normalized melting enthalpy was taken between 80°C and 180°C.

Table 1: Characterization of different types of MA-grafted polypropylenes

| Type of MAH-grafted PP | MFR (g/10min @ 190°C) | MA wt.% | Melt Peak (°C) | Enthalpy (J/g) |
|---|---|---|---|---|
| I | >100 | 1,0 | 131 - 140 | 60 - 70 |
| II | 50 - 100 | 1,0 | 158 - 165 | 89 - 99 |
| III | >100 | 1,2 | 138 - 141 | 6 - 10 |
| IV | >100 | 2,0 | 155 - 162 | 87-99 |

<u>*Component (C)*</u>

The heterophasic propylene copolymer (Hetero-B-cPP) has a MFR of 0.7 - 1.2 g/10 min @ 230°C, a melting peak in DSC second heating scan of 162 - 165°C, and a normalized melting enthalpy of 79 - 88J/g. The normalized melting enthalpy was taken between 80°C and 180°C.

The propylene random copolymer (Random-cPP) has a MFR of 7.5 - 8.5 g/10 min @ 230°C, a melting peak in DSC second melting scan of 147 - 149 °C, and a normalized melting enthalpy of 75 - 78J/g. The normalized melting enthalpy was taken between 80°C and 180°C.

The propylene homopolymer (Homo-PP) has a MFR of 2.0 g/10 min @ 230°C, a melting peak in DSC second melting scan of 162 - 164 °C, and a normalized melting enthalpy of 98 - 105J/g. The normalized melting enthalpy was taken between 80°C and 180°C.

In addition, there is a Low Anhydride Concentrated compatibilizer (LAC) present in some of the examples. The LAC has a MFR of 4.5 - 5.5 g/10 min @ 230°C, a melting peak in DSC second heating scan of 150 - 152 °C, and a normalized melting enthalpy of 60 - 65J/g. The normalized melting enthalpy was taken between 80°C and 180°C.

<u>Composition preparation</u>

Polymer compositions made from above listed polymers are prepared by reactive compounding using Coperion ZSK Mc18 twin screw extruder. Polymers are first dry blended according to the recipes then extruded at a mild ascending temperature profile began at 190°C at zone 1 and gradually increased to 210°C at zone 9. The processing parameters are then fine-tuned to keep measured temperature in the melt at between 275°C and 285°C, and the die pressure fluctuation less than 5 bars. Afterwards, the polymer composition is reprocessed at 800rpm with the standard output of 6kg/hour to reach optimal homogeneity.

EXAMPLES

The present invention is further elucidated based on the Examples below which are illustrative only and not considered limiting to the present invention.

<u>Composition of examples</u>

Table 2 shows the composition of the different examples. It shows (A) the amount of PA6, (B) the type (referring to the types of Table 1) and amount of MA-grafted polypropylene, and (C) the amounts of other polypropylenes. The wt.% expressed in the table are defined based on the combined weight of (A), (B), and (C). For the Hetero-B-cPP a wt.% is mentioned between square brackets that is defined based on the total weight of the polypropylene composition (C).

Table 2: Characterization of examples

| Ex. | (A) PA | (B) MAH-grafted PP | | (C) Polypropylene composition | | | | Densit y |
|---|---|---|---|---|---|---|---|---|
| | PA6 (wt. % ) | MA-g-PP type | MA-g-PP (wt.%) | Hetero-B-cPP (wt.%) | Random-cPP (wt.%) | Homo-PP (wt.%) | MA-g-PP (LAC) | (g/cm³) |
| E1A | 36 | I | 5 | 59 [100] | 0 | 0 | 0 | 0.97 |
| E1B | 36 | II | 5 | 59 [100] | 0 | 0 | 0 | 0.97 |
| CE1 C | 40 | I | 5 | 0 [0] | 17 | 38 | 0 | 0.98 |
| CE1 D | 40 | I | 5 | 17 [31] | 0 | 38 | 0 | 0.98 |
| CE1E | 40 | I | 5 | 0 [0] | 0 | 55 | 0 | 0.98 |
| CE1F | 40 | II | 5 | 0 [0] | 0 | 55 | 0 | 0.98 |
| CE1 G | 40 | III | 5 | 0 [0] | 0 | 55 | 0 | 0.98 |
| E1H | 40 | I | 2 | 48 [83] | 0 | 0 | 10 | 0.97 |
| CE1I | 40 | IV | 5 | 55 [100] | 0 | 0 | 0 | 0.98 |
| E2A | 45 | I | 5 | 50 [100] | 0 | 0 | 0 | 0.99 |
| E2B | 45 | II | 5 | 50 [100] | 0 | 0 | 0 | 0.99 |
| E2C | 45 | I | 5 | 0 [0] | 15 | 35 | 0 | 0.99 |
| E2D | 45 | I | 5 | 12 [24] | 0 | 38 | 0 | 0,99 |
| E2E | 45 | I | 5 | 0 [0] | 0 | 50 | 0 | 0,99 |
| E2F | 45 | II | 5 | 0 [0] | 0 | 50 | 0 | 0,99 |
| E2G | 45 | III | 5 | 0 [0] | 0 | 50 | 0 | 0,99 |
| E2H | 45 | I | 2 | 43 [81] | 0 | 0 | 10 | 0,99 |
| CE2I | 50 | IV | 10 | 40 [100] | 0 | 0 | 0 | 1,00 |
| E2J | 56 | I | 4 | 40 [100] | 0 | 0 | 0 | 1,02 |

The Examples can be divided into two blocks: block 1 with examples E1A-CE1I, and block 2 with examples E2A-CE2I and additionally E2J. These blocks can be directly compared (e.g., E1A with E2A, E1B with E2B, etc.), wherein the examples of block 1 have a lower amount of PA in the polymer composition than the examples of block 2. Examples listed as 'E' are according to the present invention, whereas examples listed as 'CE' are comparative examples, not according to the present invention. Examples CE1C-CE1G are not according to the present invention because the amount of PA6 is less than 45 wt.% while the polypropylene composition does not comprise at least 80 wt.%, based on the weight of the polypropylene composition, of one or more heterophasic propylene copolymers. Example CE1I and CE2I are not according to the present invention because the MA-grafted polypropylene, type IV, has a maleic anhydride concentration of 2.0 wt.% based on the weight of the maleic anhydride-grafted polypropylene which is outside of the claimed range. Further, in CE2I, the total MA concentration in the polymer composition reached 0.20 wt.% which is outside of the claimed range.

Examples E2J uses 100 wt.% the composition of E2A, to dry blend with 25 wt.% of PA6. The new polymer mix E2J was not processed in the twin screw extruder as was done with other examples but was directly extruded at blown film line to make film samples. This sample was created to test whether the originally dispersed droplets of PA phase in polymer composition according to the present invention will change into at least partially continuous fibrillar or lamellar microphases when molecules are oriented in molten polymer flow direction i.e. in the single screw extruder and in the die of blown film line. If it is the case, E2A should have very good mixing with the added extra PA6. Such mixing will not cause PP phase to segregate from the PA phase. This leads to E2J being a homogeneous film.

The second purpose of E2J is to verify whether the object of the invention is still achieved at the upper limit of the claimed range. By adding extra 25wt.% PA6 to 100 wt.% E2A, the PA fraction in the new polymer mix E2J increased to 56 wt.%. The PP fraction reduced to 44 wt.% and became the minority by weight fraction. There is a risk that PP phase may change from continuous matrix to dispersed droplets phase. The density of E2J is 1.02 g/cm$^3$ which is the upper limit of claimed range.

Hot air shrinkage test (HAS)

Table 3 shows the result of the film hot air shrinkage test in both the machine direction (MD) and transverse direction (TD), as well as the average over both directions. It further gives a qualitative visual result on the edges after exposure to heat. N means that the edges of the film have not melted. Y/N means the edges of the film sample show some melting, Y means the edges of the film sample show obvious signs of melting around all edges.

For easy comparison, films samples have the same sample codes to those of the polymer compositions they use.

Table 3: Shrinkage results of 50 micrometre blown films made from polymer compositions according to Table 1

| Example | Shrinkage MD (%) | Shrinkage TD (%) | Average shrinkage (%) | Melted edges? |
|---------|------------------|------------------|-----------------------|---------------|
| E1A | 1.7 | 3.0 | 2.3 | N |
| E1B | 2.3 | 7.7 | 5.0 | Y/N |
| CE1C | 8.3 | 9.7 | 9.0 | Y/N |
| CE1D | 3.3 | 16.0 | 9.7 | Y/N |
| CE1E | 6.7 | 13.0 | 9.8 | Y |
| CE1F | 8.3 | 15.0 | 11.7 | Y |
| CE1G | 9.3 | 17.0 | 13.2 | Y |
| E1H | 3.0 | 5.0 | 4.0 | Y/N |
| CE1I | 16.3 | 10.3 | 13.3 | Y |
| E2A | 0.0 | 0.7 | 0.3 | N |
| E2B | 0.0 | 2.0 | 1.0 | N |
| E2C | 0.0 | 2.0 | 1.0 | N |
| E2D | 0.7 | 1.8 | 1.3 | N |
| E2E | 2.0 | 4.0 | 3.0 | N |
| E2F | 3.0 | 5.0 | 4.0 | N |
| E2G | 3.0 | 6.3 | 4.7 | N |
| E2H | 0.0 | 1.7 | 1.0 | N |
| CE2I | 16.7 | 10.0 | 13.3 | Y |
| E2J | 10.0 | 0.0 | 0.2 | N |

It can be seen from Table 3 that the examples according to the present invention achieve an average shrinkage of at most 5%, while the comparative examples have much higher average shrinkage (9.0-13.3). And all comparative examples melt at edges. This indicates an improved thermal resistance for extruded and optionally moulded polymer compositions according to the present invention.

CE1I and CE2I show that when the amount of maleic anhydride in the ultra-low viscosity MA-g-PP of component B is higher than 1.8 wt.%, based on weight of the MA-g-PP, the extracted polymer composition does not achieve the desired thermal resistance (measured by the shrinkage).

The inventor believes that this is because comparative examples have only PP as the continuous phase and PA remains as the droplets phase. Therefore, at 180°C, which is sufficiently higher than PP melt peak temperature, all samples shrank significantly and melt at edges.

When comparing CE1I with E1A and E1B, CE1I uses the same PA6 and the same Hetero-B-cPP, with even higher PA6 concentration (40wt.% vs. 36 wt.%), but still shows poor HAS results and the film melted at edges. This is the direct evidence that a component B with too high maleic anhydride concentration (higher than 1.8 wt.%, based on weight of the MA-g-PP), will have negative effect to reach the object of the invention.

When comparing CE1I and CE2I, CE2I increased PA6 concentration from 40 wt.% to 50 wt.% and increase component B from 5 wt.% to 10 wt.% which result in the maleic anhydride concentration of 0.2wt.% in the total polymer composition. But it still has poor HAS results and the film melted at edges. This is the direct evidence that simply increasing PA6 concentration and increasing the maleic anhydride concentration may not reach the object of the invention.

On the other hand, sample E2J has the best HAS result. This result indirectly proves that PP phase in sample E2J was not segregated, otherwise the segregated PP phase will melt and shrink under 180°C. However, it cannot exclude another possibility that PP phase in E2J already changed into dispersed droplets.

Oxygen Permeability and Water Vapour Permeability

Following the same hypothesis, the inventor believes that examples according to the present invention will have both low oxygen permeability (OP) and low water vapour permeability (WVP). This is because the PP phase remains as the continuous phase, while the original dispersed droplets PA phase changes into at least partially continuous fibrillar or lamellar microphases during blown film extrusion. In contrast, the OP of comparative examples will remain high despite high percentage of PA in the composition. Table 4 shows the OP and WVP for different polymer compositions. The values for the LDPE, PP and PA6 represent generic values representative for these polymer types, and are calculated via the Innoform Permeation Calculator.

Table 4: Oxygen Permeability and Water Vapour Permeability

|  | LDPE* | PP* | CE1C | E1A | E2A | E2J | PA6* |
|---|---|---|---|---|---|---|---|
| OP | 200.0 | 55.0 | 43.5 | 5.1 | 2.7 | 2.2 | 2.0 |
| WVP | 0.10 | 0.05 | 0.13 | 0.13 | 0.14 | 0.15 | 0.88 |

It can be seen from Table 4 that the examples of E1A, E2A and E2J according to the present invention provide a unique combination of a low OP (high oxygen barrier) and a low WVP (high moisture barrier). While the comparative example CE1C, despite higher PA concentration (40wt% vs. E1A 36wt%), its OP is almost 8 times higher than that of E1A.

It is remarkable that E2J, despite its PP fraction reduced from 55 wt.% to 44 wt.% compared with E2A, has a WVP that is still very low. The good HAS, OP, WVP result of E2J confirms that the object of the invention is reachable at the upper limit of the claimed range.

DMA Storage modulus

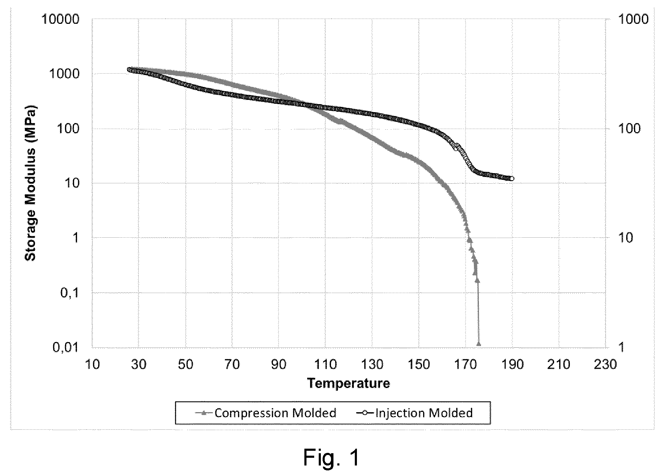

Fig. 1 shows the effect of temperature on the storage modulus of E2A samples formed through an un-orienting process and an orienting process. Compression moulding is the un-orienting process, whereas injection moulding is the orientating process.

The black line represents an injection moulded sample. A decline of the storage modulus is seen around 180°C, after which it stabilizes again. This indicates that the PA phase in injection moulded sample is at least partially continuous, which improves the samples thermal resistance property.

The grey line represents a compression moulded sample. The storage modulus is approaching to zero at 180°C. The morphology of a compression moulded sample is assumed to be very close to that of the original polymer composition, because both forms are not oriented. Therefore, the result indicates that PA phase remains as the droplets phase dispersed in the PP matrix phase in the polymer composition.

Recycling

If the morphology that both PP and PA would be in continuous phase in the polymer composition, it may disappear and change back to the PA droplets phase dispersed in the PP matrix after the alloy is melted again and again. This will bring the issue of performance repeatably after multi-cycle processing and recycling.

DMA storage modulus proves that it is not the case for the polymer composition according to the present invention, because the polymer composition has already the matrix-droplets morphology from the very beginning. Therefore, it is possible to recycle the polymer composition according to the present invention. And the improved properties of the (extruded and optionally moulded) polymer composition according to the present invention may achieved as well by a recycled polymer composition.

Blown film sample E1A is chosen for a recycling test. E1A is selected because it has the lowest PA concentration (36 wt.%) of all examples. It is more likely that performance advantage of E1A may disappear after recycling.

*Method*

2 kg of blown film E1A were first shredded in to flakes. Then flakes were compress moulded at 230°C with a force of 50 kN for 5 minutes to form 300 x 300 x 2.0 mm plates. Afterwards, the plates were shredded again into flakes which became suitable for twin screw extruder to process. The suitable flakes were processed on Coperion ZSK Mc18 twin screw extruder at a mild ascending temperature profile began at 190°C at zone 1 and gradually increased to 210°C at zone 9, 800rpm and with an output of 6kg/hour. The recycled polymers were further processed on Collin Blown Film Unit BL 200 to make a blown film according to the settings of the rest of blown film samples.

*Result*

The blown film sample is further evaluated with HAS at 180°C: the average shrinkage is 3.5%; and with oxygen permeability which is 5.5 ml*mm/(mm2*day). Both results are comparable to the results of E1A blown film. This confirms that the polymer composition can reach the object of the present invention also after recycling.

## Claims

1. Polymer composition comprising:

   (A) between 35 and 58 wt.% of polyamide 6 having a relative solvent viscosity (RSV) measured in 90% formic acid of 2.5 or higher;
   (B) between 2 and 10 wt.% of a maleic anhydride-grafted polypropylene having: i) a MFR of above 40 g/10min (@190°C 2,16kg), and ii) a maleic anhydride concentration of 0.5-1.8 wt.% based on the weight of the maleic anhydride-grafted polypropylene;
   (C) between 32 and 63 wt.% of a polypropylene composition having an MFR of less than 25 g/10min (@230°C 2,16kg), wherein said polypropylene composition comprises at least 80 wt.%, based on the weight of the polypropylene composition, of one or more heterophasic propylene copolymers when the amount of polyamide 6 is less than 45 wt.%,

   wherein the wt.% of the polymers under (A), (B), and (C) is defined based on the combined weight of (A), (B), and (C), wherein all polypropylenes present in the polymer composition are maleic anhydride-grafted polypropylene under (B) or included in the polypropylene composition under (C).

2. Polymer composition according to claim 1, having a maleic anhydride concentration of less than 0.18 wt.%, based on the combined weight of (A), (B), and (C).

3. Polymer composition according to claim 1 or 2, wherein polyamide 6 has a relative solvent viscosity (RSV) measured in 90% formic acid of 2.7 or higher.

4. Polymer composition according to any one of the preceding claims, having a density of between 0.97 and 1.02 gram/cm$^3$ measured according to ISO 1183-1:2019 (method A - immersion method).

5. Polymer composition according to any one of the preceding claims, wherein one or more heterophasic propylene copolymers has:

a) a DSC melting peak temperature of the second heating scan at a heating rate of 20K/minute of between 140°C and 170°C, preferably between 158°C and 168°C, and

b) a normalized melting enthalpy of between 55 and 95 J/g, preferably between 65 and 90 J/g, taken from the second heating scan between 80°C and 180°C.

6. Extruded and optionally moulded polymer composition wherein the polymer composition comprises at least 75 wt.% of the polymer composition according to any of claim 1-5.

7. Extruded and optionally moulded polymer composition according to claim 6, further comprising at most 25 wt.% of polyamide 6 having a relative solvent viscosity (RSV) measured in 90% formic acid of 2.5 or higher or of a polypropylene composition having an MFR of less than 25 g/10min (@230°C 2,16kg).

8. Extruded and optionally moulded polymer composition according to claim 6 or 7, wherein the polymer composition is according to any of claim 1-5.

9. Extruded and optionally moulded polymer composition according to any one of claims 6-8 having an oxygen permeability of less than 12 ml*mm/(mm$^2$*day), preferably less than 8 ml*mm/(mm$^2$*day), measured according to ASTM F1927-20 at 23°C and 50% relative humidity.

10. Extruded and optionally moulded polymer composition according to any one of claims 6-9 having a water vapour permeability of less than 0.25 gram*mm/(mm$^2$*day), preferably of less than 0.18 gram*mm/(mm$^2$*day), measured according to ASTM F1249-20 at 23°C and 85% relative humidity.

11. An extruded film having a thickness of between 1 and 250 micrometres, comprising at least 75 wt.% of the polymer composition according to any one of claim 1-5.

12. Blown film having a thickness of 50 micrometre and having a shrinkage of at most 5% in MD and TD direction after being placed in a 180°C oven for 2 minutes, comprising at least 75 wt.% of the polymer composition according to any one of claim 1-5.

13. Article comprising the polymer composition according to any one of claims 1-5.

14. Method to prepare the article according to claim 13 comprising 3D printing, film or sheet extrusion, monofilament or multifilament extrusion, foam or tube or profile extrusion, extrusion blow moulding, injection blow moulding, stretch blown moulding, thermoforming, injection moulding, or extrusion coating.

**Patentansprüche**

1. Polymerzusammensetzung umfassend:

(A) zwischen 35 und 58 Gew.-% Polyamid 6 mit einer relativen Lösungsmittelviskosität (RSV), gemessen in 90 % Ameisensäure, von 2,5 oder höher;

(B) zwischen 2 und 10 Gew.-% an einem Maleinsäureanhydrid-gepfropften Polypropylen mit: i) einer MFR von über 40 g/10 min (@190 °C, 2,16 kg) und ii) einer Maleinsäureanhydrid-Konzentration von 0,5-1,8 Gew.-% bezogen auf das Gewicht des Maleinsäureanhydrid-gepfropften Polypropylens;

(C) zwischen 32 und 63 Gew.-% an einer Polypropylenzusammensetzung mit einer MFR von weniger als 25 g/10 min (@230 °C, 2,16 kg), wobei die Polypropylenzusammensetzung wenigstens 80 Gew.-%, bezogen auf das Gewicht der Polypropylenzusammensetzung, an einem oder mehreren heterophasigen Propylencopolymeren umfasst, wenn die Menge an Polyamid 6 weniger als 45 Gew.-% beträgt,

wobei die Gew.-% der Polymere von (A), (B) und (C) bezogen auf das kombinierte Gewicht von (A), (B) und (C) definiert sind, wobei alle in der Polymerzusammensetzung vorhandenen Polypropylene Maleinsäureanhydridgepfropftes Polypropylen von (B) sind oder in der Polypropylenzusammensetzung von (C) enthalten sind.

2. Polymerzusammensetzung nach Anspruch 1 mit einer Maleinsäureanhydrid-Konzentration von weniger als 0,18 Gew.-% bezogen auf das kombinierte Gewicht von (A), (B) und (C).

3. Polymerzusammensetzung nach Anspruch 1 oder 2, wobei Polyamid 6 eine relative Lösungsmittelviskosität (RSV), gemessen in 90 % Ameisensäure, von 2,7 oder höher aufweist.

4. Polymerzusammensetzung nach einem der vorstehenden Ansprüche mit einer Dichte von zwischen 0,97 und 1,02 Gramm/cm$^3$, gemessen nach ISO 1183-1:2019 (Methode A - Immersionsverfahren).

5. Polymerzusammensetzung nach einem der vorstehenden Ansprüche, wobei ein oder mehrere heterophasige Propylencopolymere aufweisen:

   a) eine DSC-Schmelzspitzentemperatur in dem zweiten Heizscan bei einer Heizrate von 20 K/Minute von zwischen 140 °C und 170 °C, vorzugsweise zwischen 158 °C und 168 °C, und
   b) eine normierte Schmelzenthalpie von zwischen 55 und 95 J/g, vorzugsweise zwischen 65 und 90 J/g, genommen aus dem zweiten Heizscan zwischen 80 °C und 180 °C.

6. Extrudierte und gegebenenfalls geformte Polymerzusammensetzung, wobei die Polymerzusammensetzung wenigstens 75 Gew.- % an der Polymerzusammensetzung nach einem der Ansprüche 1-5 umfasst.

7. Extrudierte und gegebenenfalls geformte Polymerzusammensetzung nach Anspruch 6, ferner umfassend höchstens 25 Gew.-% Polyamid 6 mit einer relativen Lösungsmittelviskosität (RSV), gemessen in 90 % Ameisensäure, von 2,5 oder höher oder eine Polypropylenzusammensetzung mit einer MFR von weniger als 25 g/10 min (@230 °C, 2,16 kg).

8. Extrudierte und gegebenenfalls geformte Polymerzusammensetzung nach Anspruch 6 oder 7, wobei die Polymerzusammensetzung nach einem der Ansprüche 1-5 ist.

9. Extrudierte und gegebenenfalls geformte Polymerzusammensetzung nach einem der Ansprüche 6-8 mit einer Sauerstoffdurchlässigkeit von weniger als 12 ml*mm/(mm$^2$*Tag), vorzugsweise weniger als 8 ml*mm/(mm$^2$*Tag), gemessen nach ASTM F1927-20 bei 23 °C und 50 % relativer Luftfeuchtigkeit.

10. Extrudierte und gegebenenfalls geformte Polymerzusammensetzung nach einem der Ansprüche 6-9 mit einer Wasserdampfdurchlässigkeit von weniger als 0,25 g*mm/(mm$^2$*Tag), vorzugsweise von weniger als 0,18 g*mm/(mm$^2$*Tag), gemessen nach ASTM F1249-20 bei 23 °C und 85 % relativer Luftfeuchtigkeit.

11. Extrudierte Folie mit einer Dicke zwischen 1 und 250 Mikrometer, umfassend wenigstens 75 Gew.-% an der Polymerzusammensetzung nach einem der Ansprüche 1-5.

12. Blasfolie mit einer Dicke von 50 Mikrometer und mit einer Schrumpfung von höchstens 5 % in MD- und TD-Richtung nach 2 Minuten Platzieren in einem Ofen mit 180 °C, umfassend wenigstens 75 Gew.-% an der Polymerzusammensetzung nach einem der Ansprüche 1-5.

13. Gegenstand umfassend die Polymerzusammensetzung nach einem der Ansprüche 1-5.

14. Verfahren zur Herstellung des Gegenstands nach Anspruch 13, umfassend 3D-Drucken, Film- oder Folienextrusion, Monofilament- oder Multifilamentextrusion, Schaum- oder Rohr- oder Profilextrusion, Extrusionsblasformen, Spritzblasformen, Streckblasformen, Thermoformen, Spritzguss oder Extrusionsbeschichtung.

**Revendications**

1. Composition polymère comprenant :

   (A) entre 35 et 58% en poids de polyamide 6 ayant une viscosité relative du solvant (RSV) mesurée dans l'acide formique à 90% supérieure ou égale à 2,5 ;
   (B) entre 2 et 10% en poids d'un polypropylène greffé à l'anhydride maléique ayant : i) un MFR supérieur à 40 g/10 min (@190°C 2,16 kg), et ii) une concentration en anhydride maléique de 0,5 à 1,8% en poids par rapport au poids du polypropylène greffé à l'anhydride maléique ;
   (C) entre 32 et 63% en poids d'une composition de polypropylène ayant un MFR inférieur à 25 g/10 min (@230°C 2,16 kg), dans laquelle ladite composition de polypropylène comprend au moins 80% en poids, par rapport au poids de composition de polypropylène, d'un ou de plusieurs copolymères de propylène hétérophasiques lorsque la quantité de polyamide 6 est inférieure à 45% en poids,

dans laquelle le % en poids des polymères mentionnés en (A), (B) et (C) est défini par rapport au poids combiné de (A), (B) et (C), dans laquelle tous les polypropylènes présents dans la composition polymère sont le polypropylène greffé à l'anhydride maléique mentionné en (B) ou inclus dans la composition de polypropylène mentionnée en (C).

2. Composition polymère selon la revendication 1, ayant une concentration en anhydride maléique inférieure à 0,18% en poids, par rapport au poids combiné de (A), (B) et (C).

3. Composition polymère selon la revendication 1 ou 2, dans laquelle le polyamide 6 a une viscosité relative du solvant (RSV) mesurée dans l'acide formique à 90% supérieure ou égale à 2,7.

4. Composition polymère selon l'une quelconque des revendications précédentes, ayant une densité comprise entre 0,97 et 1,02 g/cm$^3$, mesurée selon la norme ISO 1183-1:2019 (méthode A - méthode par immersion).

5. Composition polymère selon l'une quelconque des revendications précédentes, dans laquelle un ou plusieurs copolymères de propylène hétérophasiques ont :

a) une température de pic de fusion DSC du second balayage de chauffage à une vitesse de chauffage de 20 K/minute comprise entre 140°C et 170°C, de préférence entre 158°C et 168°C, et
b) une enthalpie de fusion normalisée comprise entre 55 et 95 J/g, de préférence entre 65 et 90 J/g, obtenue à partir du second balayage de chauffage entre 80°C et 180°C.

6. Composition polymère extrudée et éventuellement moulée, dans laquelle la composition polymère comprend au moins 75% en poids de la composition polymère selon l'une des revendications 1 à 5.

7. Composition polymère extrudée et éventuellement moulée selon la revendication 6, comprenant en outre au plus 25% en poids de polyamide 6 ayant une viscosité relative du solvant (RSV) mesurée dans de l'acide formique à 90% supérieure ou égale à 2,5, ou d'une composition de polypropylène ayant un MFR inférieur à 25 g/10 min (@230°C 2,16 kg).

8. Composition polymère extrudée et éventuellement moulée selon la revendication 6 ou 7, dans laquelle la composition polymère est conforme à l'une des revendications 1 à 5.

9. Composition polymère extrudée et éventuellement moulée selon l'une quelconque des revendications 6 à 8, ayant une perméabilité à l'oxygène inférieure à 12 ml*mm/(mm$^2$*jour), de préférence inférieure à 8 ml*mm/(mm$^2$*jour), mesurée selon la norme ASTM F1927-20 à 23°C et 50% d'humidité relative.

10. Composition polymère extrudée et éventuellement moulée selon l'une quelconque des revendications 6 à 9, ayant une perméabilité à la vapeur d'eau inférieure à 0,25 gramme*mm/(mm$^2$*jour), de préférence inférieure à 0,18 gramme*mm/(mm$^2$*jour), mesurée selon la norme ASTM F1249-20 à 23°C et 85% d'humidité relative.

11. Film extrudé ayant une épaisseur comprise entre 1 et 250 micromètres, comprenant au moins 75% en poids de la composition polymère selon l'une quelconque des revendications 1 à 5.

12. Film soufflé ayant une épaisseur de 50 micromètres et présentant un retrait d'au plus 5% dans les directions MD et TD après avoir été placé dans un four à 180°C pendant 2 minutes, comprenant au moins 75% en poids de la composition polymère selon l'une quelconque des revendications 1 à 5.

13. Article comprenant la composition polymère selon l'une quelconque des revendications 1 à 5.

14. Procédé de préparation de l'article selon la revendication 13, comprenant l'impression 3D, l'extrusion de film ou de feuille, l'extrusion de monofilament ou de multifilament, l'extrusion de mousse, de tube ou de profilé, le moulage par extrusion-soufflage, le moulage par injection-soufflage, le moulage par étirage-soufflage, le thermoformage, le moulage par injection ou le revêtement par extrusion.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3670131 A1

- WO 2005035648 A1

**Non-patent literature cited in the description**

- **SATHE et al.** *Journal of applied polymer science*, 1996, vol. 61 (5), 97-107